# EUROPÄISCHE PATENTSCHRIFT

(11) **EP 0 599 865 B1**
(45) Veröffentlichungstag und Bekanntmachung des Hinweises auf die Patenterteilung: **27.12.1995**
(21) Anmeldenummer: 92915576.0
(22) Anmeldetag: 14.07.1992
(51) Int. Cl.: G01C 19/72, H01S 3/103

(54) **EINRICHTUNG ZUR MESSUNG DER DREHGESCHWINDIGKEIT**
DEVICE FOR MEASURING ROTATIONAL SPEED
DISPOSITIF DE MESURE DE LA VITESSE DE ROTATION

(30) Priorität: 22.08.1991 DE 4127859
(43) Veröffentlichungstag der Anmeldung: 08.06.1994
(73) Patentinhaber: Teldix GmbH, D-69046 Heidelberg (DE)
(72) Erfinder: NEUKIRCH, Michael, D-6803 Edingen (DE); MÖSS, Eberhard, D-7157 Murrhardt (DE)
(74) Vertreter: Thier, Heinz
(86) Internationale Anmeldenummer: DE9200572
(87) Internationale Veröffentlichungsnummer: WO9304340

(56) Entgegenhaltungen:
- ISA TRANSACTIONS Bd. 28, Nr. 2, 1989, RESEARCH TRIANGLE PARK, NC, US, Seiten 41-49, XP000050505 ; C.M. FERRAR : 'Progress in fiber optic development'
- PATENT ABSTRACTS OF JAPAN vol. 6, no. 234 (E-143) 20. November 1982 ; & JP-A-57 135 535
- OPTICS LETTERS Bd. 16, Nr. 3, 1. Februar 1991, New York, US, Seiten 189-190, XP000172794 ; CHIEN et al.: 'Fiber-optic gyroscopes based on polarization scrambling'
- PATENT ABSTRACTS OF JAPAN vol. 11, no. 245 (E-531) 11. August 1987 ; & JP-A-62 059 429

## Beschreibung

Die Erfindung betrifft eine Einrichtung zur Messung der Drehgeschwindigkeit nach der Gattung des Hauptanspruchs.

### Stand der Technik

Aus der DE-OS 38 05 904 ist es bekannt, für die Lichtquelle von Faserkreiseln Superlumineszenzdioden zu verwenden.

Superlumineszenzdioden zeichnen sich durch eine große spektrale Breite des emittierten Lichts bei hoher Lichtleistung aus. Aufgrund des von der Herstellung von Laserdioden abweichenden Herstellungsverfahrens und der relativ geringen Herstellstückzahl sind Superlumineszenzdioden sehr teuer, so daß allein die Lichtquelle 10% bis 20% der Herstellkosten des Faserkreisels ausmacht.

### Aufgabe

Der Erfindung liegt die Aufgabe zugrunde, die Herstellkosten von Faserkreiseln, bei gleicher Qualität, zu senken.

Die Aufgabe wird durch die im kennzeichnenden Teil des Anpruchs 1 angegebenen Merkmale gelöst.

Für die Funktion des Faserkreisels ist die Verwendung eines Halbleiterlasers mit kurzer Kohärenzlänge (d.h. mit großer spektraler Breite) vorteilhaft, damit Lichtwellen, die an Koppel- bzw. Störstellen reflektiert werden, nicht mit den eigentlichen Nutzsignalen interferenzfähig sind.

Verwendet man anstelle dieser Superlumineszenzdioden einen Halbleiterlaser, wie er auch in CD-Playern eingesetzt wird, verringern sich dadurch die Herstellkosten des gesamten Faserkreisels erheblich. Um die für den Kreiselbetrieb notwendige große spektrale Breite zu erhalten, wird der Laser unterhalb des Schwellstrombereichs betrieben. Das Emissionsspektrum gleicht dann dem einer Superlumineszenzdiode.

Durch den Betrieb unterhalb des Schwellstrombereiches wird zudem eine längere Lebensdauer des Lasers erreicht.

### Figurenbeschreibung

Die Erfindung wird nachfolgend anhand der Zeichnung näher erklärt.

Es zeigen:
- Fig. 1: den beispielhaften Aufbau einer Einrichtung zur Messung der Drehgeschwindigkeit (Faserkreisel),
- Fig. 2: das Lichtspektrum einer Superlumineszenzdiode,
- Fig. 3: das Lichtspektrum einer CD-Laserdiode im normalen Betrieb,
- Fig. 4: das Lichtspektrum einer CD-Laserdiode, die unterhalb des Schwellstrombereiches betrieben wird.

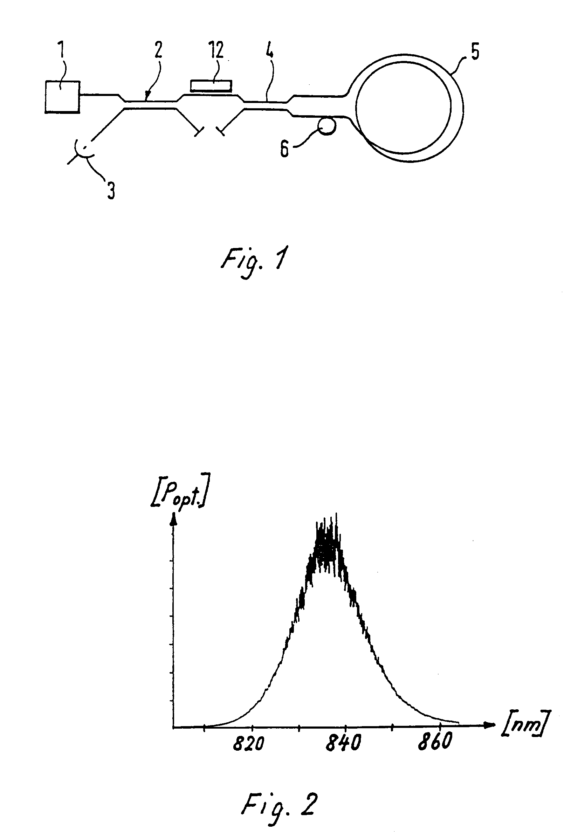

Der in Fig. 1 gezeigte Faserkreisel besteht aus einer Laserdiode 1, einem Strahlteiler 2 mit nachgeschalteter Fotodiode 3, einem Polarisator 12, einem Strahlteiler 4, einer spulenartig aufgebauten Lichtleitfaserwicklung 5 und einem Modulator 6.

Auf die Funktion eines Faserkreisels soll hier nicht näher eingegangen werden; sie wird für das Verständnis der Erfindung vorausgesetzt.

Fig 2 zeigt das Lichtspektrum einer Superlumineszenzdiode. Auf der Ordinate des Koordinatensystems ist die optische Leistung und auf der Abszisse die Wellenlänge dargestellt. Die spektrale Breite wird bei der halben optischen Leistung bestimmt, so daß sich bei dem gezeigten Beispiel eine Bandbreite von ca. 15 nm ergibt.

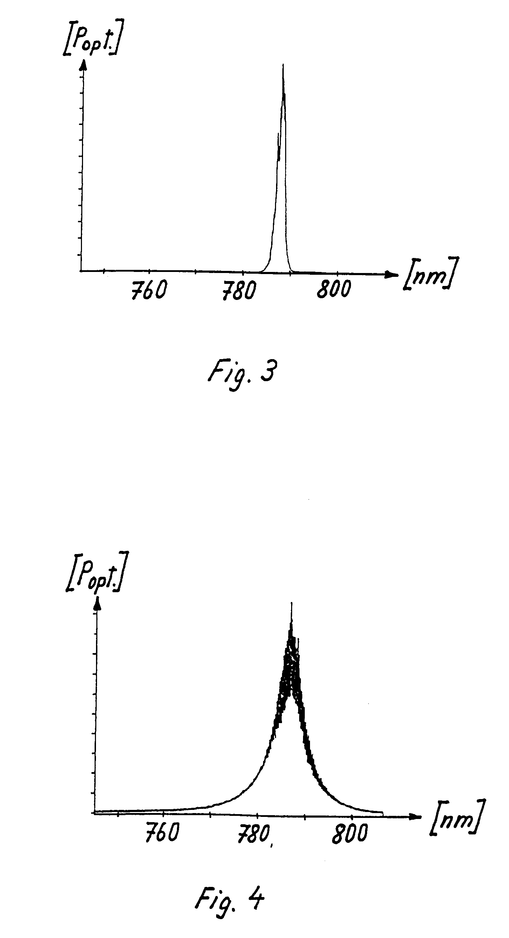

In der Fig. 3 wird das Lichtspektrum einer CD-Laserdiode bei Normalbetrieb gezeigt.

Ordinate und Abszisse zeigen die gleichen Größen wie das in Fig. 2 dargestellte Koordinatensystem.
Es ergibt sich hier eine Bandbreite von ca. 2 nm.

Wird die CD-Laserdiode unterhalb des Schwellstrombereiches betrieben, ergibt sich eine für den Betrieb eines Faserkreisels hinreichende Bandbreite von ca. 10 nm. Fig. 4 zeigt das Lichtspektrum einer unterhalb des Schwellstrombereichs betriebenen CD-Laserdiode.

Es wird darauf hingewiesen, daß der Faserkreisel auch andere optische Komponenten aufweisen kann als in Fig. 1 gezeigt. So können z.B. auch 1 x 3 Koppler, 3 x 3 Koppler oder 4 x 4 Koppler statt der gezeigten 2 x 2 Koppler eingesetzt werden. Weiter können die optischen Komponenten durch zusätzliche ergänzt werden, so z.B. zwei Modulatoren.

## Patentansprüche

1. Einrichtung zur Messung der Drehgeschwindigkeit nach dem Sagnac-Typ mit einer Lichtquelle, dadurch gekennzeichnet, daß die Lichtquelle (1) eine CD-Laserdiode ist und daß die CD-Laserdiode (1) unterhalb des Schwellstrombereiches betrieben wird.

## Claims

1. Device for measuring rotational speed which is of the Sagnac type and has a light source, characterized in that the light source (1) is a CD laser diode (1), and in that the CD laser diode (1) is operated below the threshold-current range.

## Revendications

1. Dispositif de mesure de la vitesse de rotation selon le type Sagnac, utilisant une source lumineuse, caractérisé en ce que la source lumineuse (1) est une diode laser de disques CD et cette diode laser de disques CD (1) fonctionne en dessous de la plage du seuil de courant.
